# EUROPEAN PATENT APPLICATION

(11) **EP 3 629 270 A1**
(43) Date of publication of application: **01.04.2020**
(21) Application number: 19200172.5
(22) Date of filing: 27.09.2019
(51) Int. Cl.: G06Q 10/10, G06N 20/00, G06Q 30/02, G06Q 30/06, G07B 15/02, G07C 1/30

(54) **AUTOMATIC PARKING SYSTEM**

(30) Priority: 28.09.2018 EP 18197706
(71) Applicant: Konekt ApS, 2600 Glostrup (DK)
(72) Inventor: ERIKSEN, Lasse, 3200 Helsinge (DK)
(74) Representative: Høiberg P/S

(57) **Abstract**

The invention regards a parking system, comprising: a vehicle movement device, comprising at least a motion sensor and a communication unit, and a mobile communication device comprising a parking application and a communication unit, wherein the vehicle movement device is arrangeable in a vehicle, and wherein the vehicle movement device is configured to activate the parking application when the motion sensor senses that the vehicle is parked.

## Description

### Field of invention

The present invention relates to parking system, comprising: a vehicle movement device, comprising at least a motion sensor and a communication unit, and a mobile communication device comprising a parking application and a communication unit, wherein the vehicle movement device is arrangeable in a vehicle, and wherein the vehicle movement device is configured to activate the parking application when the motion sensor senses that the vehicle is parked.

### Background of invention

Many of us have experienced the chill when remembering that after parking the car a car park ticket was never bought. Hurriedly we return to the car to hopefully find that no parking ticket has been written. However, not everybody is given that relief and in addition a lot of time has been wasted.

If it is remembered that a car park ticket has to be bought the driver has to find the car park ticket machine and find out the amount of money, if any, that has to be paid for the time interval. That can be extra difficult provided we are in a foreign country, which language we do not master. Some of these issues have already been taken care of by applications for mobile phones, which allow the user to pay the car park ticket. The car park ticket can be paid for in two ways. In a first way, the user buys a car park ticket allowing the user to park for a limited period of time, which can often be reduced if the user returns earlier than expected, and in the second way the user starts a clock that will run until the user stops the clock, when the corresponding fee is calculated. Unfortunately, since the applications are issued by owners of the car parks there is no incentive on their part to inform the user not to pay a too much. The application will not protest if the user pays for a more expensive zone when the car is parked in a less expensive one, or if the user buys a car part ticket for a period of day when parking is free. The application will not remind you to stop the clock or to terminate the car park ticket if you returned to the car earlier than expected.

The patent document EP2259228 discloses a car-device installed inside the car, comprising a buzzer as acoustic warning, and a remote server web with an internal database, geographical map, and connection with a bank. Payment is initiated, when the user parks and press the start-button. An audio notification system based on GPS may alert the user, if he forgets to terminate payment after parking. The device may be used to estimate vacant parking places in an area. The device may comprise an accelerometer for accident detection.

The patent document WO 2007/048619 discloses a parking system comprising a centrally positioned transmitter and a receiver placed in a car. The receiver comprises an electronic payment account. When the car is parked in the vicinity of a transmitter (as monitored by motor or door lock sensors), parking payment may be initiated according to the zone of the transmitter.

DE 10 2004 032 796 discloses a parking watch, where a parking extension can be ordered by a mobile phone, and also wherein a parking lot may be pre-booked.

DE 10 2013 225 473 discloses an electronic parking watch in communication with a mobile phone. Through the use of the mobile phone arrival time may be changed in the parking watch and/or the parking watch may send a warning about end of parking time.

The patent document WO 2015/078553 discloses a parking system for areas, where different payment providers are operating. The parking device comprises a GPS unit, and network communicator for accessing an internet server, providing date and parking information. The device can communicate with a mobile phone for warning, and extension of parking time. Optionally, the device may be used to estimate vacant parking places in an area.

The patent document US 2018/268626 discloses a sensing unit for recording the status of a vehicle. The sensor may be a smartphone provided with a sensor, e.g. an acceleration sensor, angular velocity sensor, geomagnetic sensor, barometric sensor, camera, microphone, GPS unit for aiding insurance companies to classify drivers.

The patent document WO 2011/098880 discloses a vehicle notification sound emitting apparatus for informing the surroundings that the vehicle will transition from a still-standing state to a moving state.

The patent document WO 2006/042068 discloses an acceleration sensor for use within moving vehicles to reduce collisions.

A more precise and safe parking watch or parking system is needed, where the risk of erroneous parking payment is reduced.

### Summary of invention

The present disclosure relates to a parking system or a first parking system that comprises: a vehicle movement device, comprising at least a motion sensor and a communication unit, and a mobile communication device comprising a parking application and a communication unit, wherein the communication devices are adapted to communicate with each other, wherein the vehicle movement device is arrangeable in a vehicle, and wherein the vehicle movement device is configured to activate the parking application when the motion sensor senses that the vehicle is parked.

The motion sensor notifies the vehicle movement device, when the motion sensor senses that the vehicle is parked and/or the driver or user is about to leave the vehicle. The vehicle movement device communicates the information through wire or preferably wirelessly to the mobile communication device that opens up the parking application so that the user can activate or buy (from now on to buy a car park ticket also means to activate a car park ticket, and vice versa) a car park ticket. This is advantageous, since the user does not need to remember to open the parking application, and since the parking system is not dependent on external devices registering the arrival of the vehicle in the parking spot. The user cannot forget to buy the car park ticket, and will not receive a parking ticket.

The vehicle movement device and the mobile communication device can be two separate units or the vehicle movement device can be integrated in the mobile communication.

If the user still forgets to buy the car park ticket, and the motion sensor senses that the user is leaving the vehicle, the mobile communication device may issue a second notification like an audio, a visual, and/or a vibrational second notification to further remind the user to buy the car park ticket through the parking application.

In an embodiment of the present disclosure the vehicle movement device can be further configured to provide a notification when the motion sensor senses that parking of the vehicle has terminated.

The motion sensor may notify the vehicle movement device, when the motion sensor senses that user has returned to the vehicle and/or parking of the vehicle has terminated. In the same way as above the vehicle movement device may communicate the information to the mobile communication device that provides a notification that parking of the vehicle has terminated to the user or the vehicle movement device provides the notification through other means e.g. through means of the vehicle. The user will not forget to terminate the car park ticket and will not risk paying too much. If the mobile communication device finds out that the car park ticket in the parking application has expired preferably no notification is issued not to bother the user unnecessarily.

By the communication units of the vehicle movement device and of the mobile communication device, the vehicle movement device and the mobile communication device can be able to communicate with at least each other.

In an embodiment of the present disclosure the notification may be an audio, visual, and/or vibrational notification.

An audio notification can be easily recognised and is hard to miss. The audio notification can be a notification through the loudspeakers of the mobile communication device and/or of the radio system in the vehicle.

A visual notification is hard to miss if you look in the right direction. For a person with reduced hearing visual notification will be preferable. The visual notification can be the mobile communication device flashing or the interior light of the vehicle. The user sitting in the vehicle cannot look in a direction where the flashing of the interior light of the vehicle is not seen.

A vibrational notification preferably through something worn by or touching the user like the mobile communication device, a vibrator worn by the user, or the vehicle seat is also hard to miss and will be beneficial for a user with limited hear abilities.

A combination of the audio and the visual notifications, a combination of the audio and the vibrational notifications, a combination of the visual and the vibrational notifications or a combination of all three notifications will further eliminate the possibility that the user does not notice the notification(s).

In an embodiment of the present disclosure, the activation of the parking application may include setting the parking time to a predetermined time-period. The parking application may ask the user to estimate the period of time of the parking. If the user returns to the vehicle ahead of time it is important that the car park ticket is terminated so that the user does not pay for a period of time the user is not utilising. In this situation, the notification when terminating the parking can be very beneficial.

In an embodiment of the present disclosure, the mobile communication device may be a mobile phone, a smart phone or a tablet. Such mobile communication devices will be beneficial having a screen where information like the parking application can be presented to the user and the user can easily buy or terminate the car park ticket. The smart phone and the tablet also have the means for sending an audio, a visual, and/or a vibrational notification to the user.

Since the user will always bring the smart phone when leaving the vehicle, the second notification that the user has forgotten to buy a car park ticket can advantageously be sent through the smart phone.

In an embodiment of the present disclosure, the vehicle may be a car or a motorcycle. Until today cars and motorcycles are the vehicles that may have to buy a car part ticket when parked.

In an embodiment of the present disclosure, the motion sensor may be at least one GPS unit, at least one accelerometer unit, at least one pressure sensor, at least one ball motion sensor, and/or a Bluetooth piconet linking at least two Bluetooth devices or a first Bluetooth device and a second Bluetooth device.

The motion sensor may be a Bluetooth piconet linking at least two devices, where the vehicle movement device can comprise the one Bluetooth device and the vehicle, preferably the radio system of the vehicle, can comprise the other Bluetooth device. When the user arrives at a parking spot to park the vehicle and switches off the engine, the Bluetooth device of the vehicle is switched off, too. The vehicle movement device will sense that the connection between the Bluetooth device of the vehicle movement device and the Bluetooth device of the vehicle is lost, and the vehicle movement device will tell the mobile communication device to open the parking application so that a car park ticket can be bought. That the vehicle is parked can be sensed before the user even has opened the door and the user the take care of the car park ticket before the user gets distracted by other impressions. Vehicles, where the engine stops at a red light, will not have the Bluetooth device switched off when the engine is not turning. In this case, the piconet linking the two Bluetooth devices is not broken. The vehicle movement device will know when the vehicle is parked and when the vehicle has stopped at a red light.

Similarly, when the engine is switched on, the connection between the Bluetooth device of the vehicle movement device and the Bluetooth device of the vehicle is reestablished, and the vehicle movement device will send a notification that the car park ticket should be terminated if the car park ticket has not already expired.

The motion sensor may be an accelerometer unit that can register movements and send the information to the vehicle movement device. If the accelerometer unit has not registered within a certain time-period like e.g. within the last 5, 10 or 15 min the motions the vehicle causes when driving and the accelerometer unit then registers the vibrations from opening and/or closing of the vehicle door the vehicle movement device will conclude that the user has returned and is about to leave the parking spot. A notification will be sent through the mobile communication device to remind the user to terminate the car park ticket if it has not expired yet. This way the user will be notified before the user starts the engine, the engine is not going when the user is terminating the car park ticket saving gas and the environment. This is just one example how the accelerometer unit could sense that the user is about to drive away from the parking spot and a car park ticket needs to be terminated.

If the accelerometer unit has registered within a certain time-period like e.g. within the last 1, 2 or 3 min the motions the vehicle causes when driving and the accelerometer unit then registers the vibrations from opening and/or closing of the vehicle door, the vehicle movement device will conclude that the user has parked the vehicle. The parking application will open up in the mobile communication device, and if the user does not buy a car park ticket a second notification may be sent preferably through the mobile communication device to urge the user to buy a car park ticket. This is just one example how the accelerometer unit could sense that the vehicle has been parked and a car park ticket needs to be bought.

The combination of the accelerometer unit and the Bluetooth piconet linking at least two devices would be extra beneficial since with the accelerometer unit as motion sensor the vehicle movement device will be able to send the notification about terminating the car park ticket before the vehicle engine is turned on, and with the Bluetooth piconet linking at least two devices as motion sensor the vehicle movement device will be able to open the parking application immediately after the engine is switched off, when the user is still in the vehicle and before the user is distracted by anything else.

With one GPS unit as a motion sensor, the motion sensor can preferably be positioned in the mobile communication device. The coordinates can be registered by the GPS unit where the vehicle was parked, and when the mobile communication device with the GPS unit is approaching those coordinates, a notification will be issued to terminate the car park ticket, which can be achieved before the user reaches the vehicle so that the user can just drive away without losing any time. This will be extra beneficial in combination with one or both of the Bluetooth piconet linking at least two devices, the pressure sensor, the ball motion sensor and the accelerometer unit as motion sensors.

With two GPS units, one in the mobile communication device and one in the vehicle movement device if positioned in the vehicle or in the vehicle if not, when the coordinates of the two GPS units start differing the vehicle movement device will open the parking application in the mobile communication device so that the user can buy the car park ticket. When the coordinates of the two GPS units start coming closer to each other the vehicle movement device will send the notification to terminate the car park ticket if the ticket has not already expired.

A pressure sensor can preferably be positioned in the vehicle and most preferably in the vehicle movement device. The pressure sensor can be measuring the pressure inside the vehicle. The opening and especially the closing of a door of the vehicle will change the pressure inside the vehicle that will be detected by the pressure sensor. In principle, the procedures when leaving the vehicle (activating the parking application) and entering the vehicle (providing the notification) are the same: a vehicle door is opened and the vehicle door is closed. However, the movements of the persons inside the vehicle can be detected by the pressure sensor. If the changes in pressure corresponding to the movements of the persons inside the vehicle precede or succeed the changes in pressure due to the opening and closing of the door will be a clear indication whether the parking application should be activated, precede, or the notification should be provided, succeed.

Another possibility would be to combine the pressure sensor with another motion sensor. A good supplement would be the Bluetooth piconet linking at least two devices as a motion sensor, since if the two devices are connected or linked that means that the mobile communication device comprising one of the two devices is actually close to the vehicle movement device comprising the other of the two devices. If the Bluetooth piconet is linked before but not after (or at least not some time after before) the opening and closing of the vehicle door sensed by the pressure sensor that would be a first indication that the vehicle is parked, thus activating a parking application. If the Bluetooth piconet is linked after but not before (or at least not some time before) the opening and closing of the vehicle door sensed by the pressure sensor that would be a second indication that parking of the vehicle has terminated, thus providing a notification that parking of the vehicle has terminated.

The pressure sensor can have a magnet movable inside a coil or a helical wire connected to a sensor for measuring voltage or current.

A change in pressure inside the vehicle will move the magnet, which will induce a signal in the wire that can be measured by the sensor. When there is no pressure change, no power is needed. The induced signal could be used to wake up other motion sensors and/or the vehicle movement device and also activate the parking application. By checking that a door of the vehicle is opened will be a battery saving way of checking if the vehicle is parked because until the signal from the pressure sensor is received by the vehicle movement device and/or the mobile communication device, the vehicle movement device and/or the mobile communication device (at least those features of the mobile communication device that is used for the parking system) can be dormant. That the vehicle movement device and/or the mobile communication device is dormant can mean that a first Bluetooth device of the vehicle movement device and/or a second Bluetooth device of the mobile communication device is not sending the first Bluetooth signal, or a GPS unit of the vehicle movement device and/or of the mobile communication device is not looking for a position. That the vehicle movement device and/or the mobile communication device is dormant will save the battery.

Instead of the magnet moving inside a coil or a helical wire inducing an electric signal, the pressure sensor can transfer the measured pressure in other ways, e.g. by an electronic or optical signal, or an electric signal generated in another way.

A ball motion sensor is a cost-effective and reliable way of telling whether the vehicle has been parked or is moving. The ball(s) in the ball motion sensor has/have a lowest position with a lowest gravitational potential energy. When the ball motion sensor is not exposed to outer forces the ball(s) will return to this lowest position. At this lowest position, the electrical contact between the two conductors is either made or broken. At all other positions, the electrical contact between the two conductors is the opposite; if the electrical contact between the two conductors is made at the lowest position, the electrical contact between the two conductors is broken or interrupted for all other positions of the ball(s). When the electrical contact between the two conductors is broken or interrupted that corresponds to that the interrupted first signal. To save energy when the vehicle is parked, the electrical contact is preferably disconnected, broken, interrupted when the ball(s) is/are in the lowest position.

By applying a voltage on one of the conductors, the electrical contact can be determined and so the state of the ball motion sensor by measuring the voltage of the other conductor.

The one or more balls in their resting state, when no movements influence the one or more balls either makes or breaks contact between the conductors. When the one or more balls are moving around in the cavity due to movements of the vehicle movement device due to movements of the vehicle, there is a change in the contact between the conductors so that if the one or more balls makes contact between the conductors in the resting state, then the movement of the vehicle and thus also the one or more balls causes a break in the contact between the conductors, and vice versa. This is a very reliable motion sensor that needs very little electrical power.

In principle, the ball(s) when moving around in the cavity due to movement of the ball motion sensor will be in the lowest position for a short time. When passing by the lowest position the electrical contact will change, and the ball motion sensor would tell that the ball motion sensor is in the lowest position, which would activate the parking application. This is not preferable. The parking application is only activated when the ball motion sensor has been in the lowest position for more than the second predetermined time-period. When accidentally passing by the lowest position the ball(s) will only be at the lowest position for a fraction of a second. For that reason, the second predetermined time-period could preferably be at least 0.5 s. When driving on a straight and horizontal road, the ball(s) could for some time be in the lowest position even though the vehicle is moving. Small corrections of the direction of the vehicle will be inevitable due to e.g. wind, loose steering, or change in inclination and the second predetermined time-period could preferably be at least 5 s to take care of this.

The ball motion sensor can be made so sensitive that the vibrations from a combustion engine influence the ball(s) in the ball motion sensor to leave the lowest position. In that case, only when the combustion engine is switched off, the ball(s) in the ball motion sensor can stay in the lowest position and the ball motion sensor will register that the vehicle is parked and the parking application is activated.

The ball motion sensor can be made less sensitive so that the vibrations from a combustion engine do not influence the ball(s) in the ball motion sensor to leave the lowest position. In that case, there is no danger, either, that the influence of wind blowing past the vehicle will cause movements on the vehicle that move the ball(s) away from the lowest position so that the parking application cannot be activated.

One sensitive ball motion sensor and one less sensitive ball motion sensor might be a good combination. The sensitive ball motion sensor will sense whether the engine is running and the less sensitive ball motion sensor will sense whether the vehicle is moving/turning. When both ball motion sensors are in the lowest position and the ball motion sensors will register that the vehicle is parked and the parking application is activated.

The ball motion sensor will lack an ability to determine direction, which will mean that the motion sensor will be very simple, cost-effective and reliable.

Preferably, the software application is configured for executing the step of activating the vehicle movement device for establishing the Bluetooth piconet between the Bluetooth devices of the vehicle movement device and of the mobile communication device, or activating the GPS unit(s) to check the position of the vehicle movement device and/or of the mobile communication device, when the vehicle movement device and/or the mobile communication device registers that electrical contact between the two conductors of the ball motion sensor is made or broken or when the pressure sensor senses a pressure change inside the vehicle or when the accelerometer unit senses vibrations from the opening and closing of a vehicle door.

That the vehicle movement device can be dormant when not in use will save battery life.

Preferably, the mobile communication device registers that electrical contact between the two conductors of the ball motion sensor is made or broken for longer than the second predetermined time-period.

The pressure sensor (pressure changes), the accelerometer unit (movements of the vehicle) and the ball motion sensor (movements of the vehicle) will all detect when a door is opened and closed, while the GPS unit and preferably two GPS units as well as the establishment or disconnection of a first and a second Bluetooth devices in a Bluetooth piconet will be able to tell whether the user is about to leave the vehicle.

So if the one GPS unit has followed the roads/streets for vehicles, the two GPS units have stayed together, or the Bluetooth piconet is established and a door is opened and closed as detected by the pressure sensor, the accelerometer unit or the ball motion sensor followed by no change in the behaviour of the GPS unit(s) or the Bluetooth piconet (the one GPS unit still follows the road, the two GPS units still stay together, or the Bluetooth piconet still stays established/connected) then it was probably just a passenger leaving the vehicle and the parking application should preferably not be activated.

We suppose that the one GPS unit can compare the position with an available map over the roads/streets for vehicles of the area in question.

If the one GPS unit has followed the roads/streets for vehicles, the two GPS units have stayed together, or the Bluetooth piconet is established and a door is opened and closed as detected by the pressure sensor, the accelerometer unit or the ball motion sensor followed by a change in the GPS unit(s) or the Bluetooth piconet (the one GPS unit does not follow the road, the two GPS units leave each other, or the Bluetooth piconet is disconnected) then the vehicle has been parked and the parking application should preferably be activated.

If the vehicle leaves the roads/streets for vehicles because a handicapped person has to be transported all the way to the entrance of a house located at a car-free zone or the house located at a car-free zone has to be reached for delivering large items that cannot be carried far, like e.g. furniture, or if Bluetooth piconet is disconnected because one of the Bluetooth devices even though in the vehicle is put in a bag or in a pocket, and the signal cannot be received, the pressure sensor, the accelerometer unit or the ball motion sensor will tell that the vehicle is still not parked, since no vehicle door has been opened and closed. The parking application would not be activated.

In an embodiment of the present disclosure, the vehicle movement device can be configured to activate the parking application when the Bluetooth piconet is disconnected or senses that a signal strength or a received signal strength indication (RSSI) of a first Bluetooth signal received by at least one of the Bluetooth devices decreases in at least three consecutive measurements.

The signal strength of the Bluetooth signal from one of the Bluetooth devices to the other Bluetooth device is dependent on the distance between the Bluetooth devices and so also between the mobile communication device and the vehicle movement device. One of the Bluetooth devices can be the transmitting unit and the other Bluetooth device can be the receiving unit. Preferably, the Bluetooth device in the vehicle movement device is the transmitting unit, since transmitting the Bluetooth signal needs more energy than receiving the Bluetooth signal and power can be provided to the Bluetooth device in the vehicle movement device by the vehicle battery, that has a larger capacity than a battery of most mobile communication devices, and that is always charged when driving the vehicle. To save battery power, the parking system can be configured so that only one of the Bluetooth devices is transmitting the Bluetooth signal, and the other Bluetooth device is receiving the Bluetooth signal.

If a user carrying the mobile communication device moves away from the vehicle movement device in the vehicle the signal strength will decline. By comparing the received signal strength indication (RSSI) of the receiving unit of consecutive Bluetooth signals it is possible to see whether the mobile communication device is moving away from the vehicle movement device. By at least three consecutive measurements or Bluetooth signals it will be possible to determine a direction. This will be a safe, unambiguous and reliable way of activating the parking application as well as an effective and battery-saving configuration.

In an embodiment of the present disclosure, the first Bluetooth signal can be sent using iBeacon protocol, Eddystone protocol, AltBeacon protocol or GeoBeacon protocol, or any similar type of Bluetooth protocol. The vehicle movement device can be configured to activate the parking application due to a lack of receipt of the first Bluetooth signal by one of the Bluetooth devices, preferably for a period longer than a first predetermined time-period, and/or wherein the vehicle movement device can be configured to provide a notification that parking of the vehicle has terminated due to a receipt of the first Bluetooth signal by one of the Bluetooth devices.

The first Bluetooth signal can be repeatedly be sent with a first predetermined time-period. If the first Bluetooth signal is sent repeatedly with the first predetermined time-period, and the first Bluetooth signal is shorter than the first predetermined time-period, battery life will be saved of the battery supplying power for transmitting the first Bluetooth signal.

Bluetooth signals using any of the iBeacon protocol, Eddystone protocol, AltBeacon protocol or GeoBeacon protocol will require less battery power than if any of the iBeacon protocol, Eddystone protocol, AltBeacon protocol or GeoBeacon protocol is not used.

The iBeacon protocol, Eddystone protocol, AltBeacon protocol or GeoBeacon protocol, will send one way communication. If the first Bluetooth signal is sent by one of the Bluetooth devices and received by the other Bluetooth device, the vehicle movement device and the mobile communication device will be close to each other, which will not be an indication that the parking application should be activated. If the first Bluetooth signal is not received that will be an indication that the vehicle movement device and the mobile communication device are moving away from each other and the parking application should be activated. When the first Bluetooth signal is not received the receiving unit will tell the parking application to be activated. As long as the first Bluetooth signal is received, no action is taken, i.e. no further signal is sent back to the transmitting unit (the vehicle movement device or the mobile communication device), which will save battery life. Preferably, the Bluetooth device of the vehicle movement device is the transmitting unit and the Bluetooth device of the mobile communication device is the receiving unit, since the vehicle movement device can be supplied by electrical power from the battery of the vehicle that normally has a much higher capacity than a battery of a mobile communication device.

The signal strength of the first Bluetooth signal can be set so that first Bluetooth signal is strong enough to avoid that the first Bluetooth signal is not received because the mobile communication device was put in a bag or in a pocket, where the signal strength of the first Bluetooth signal could be reduced so much that the first Bluetooth signal cannot be received even though the mobile communication device is inside the vehicle. At the same time, the signal strength of the first Bluetooth signal can be set so that first Bluetooth signal is weak enough that the parking application is activated when the mobile communication device is just outside the vehicle. In that way, the user is able to use the parking application immediately after leaving the vehicle before anything else catches his/her attention.

In an embodiment, the first and/or the second predetermined time-period can be at least 5 s, preferably at least 15 s, and more preferably at least 30 s, even more preferably at least 60 s, and most preferably at least 5 min.

The first Bluetooth signal can be repeatedly transmitted at least for a while with a first predetermined time-period, where the first Bluetooth signal is retransmitted for every new first predetermined time-period.

The second predetermined time-period of the ball motion sensor can preferably be at least one or at least five second(s) if the ball motion sensor is very sensitive and registers the vibrations from the engine preferably from the combustion engine. The second predetermined time-period can preferably be at least 15 seconds, since modern engines turn off in front of traffic lights and traffic lights are mostly not red for more than 15 s. To take care of all traffic lights even the traffic lights with long intervals the second predetermined time-period can preferably be at least 30 or even at least 60 seconds.

If the ball motion sensor is less sensitive and does not register the vibrations from the engine, in order to avoid the parking watch to be activated when stopping in front of a traffic light, the second predetermined time-period can preferably be at least 15, 30 or 60 seconds for the same reasons as mentioned just before.

In an embodiment of the present disclosure the vehicle movement device may be configured for accessing an online database comprising data about the fee per time unit dependent on location, time of the day and day of the week, national parking regulations, and/or available parking spots in the area.

That the database is online means that all the data can easily be updated.

The vehicle movement device or the mobile communication device will preferably have something that can determine the position of the parking spot. That could be a GPS unit, which can then also be used as the motion sensor as described above. If the mobile communication device has access to a cellular network, the position of the mobile communication device can be determined in relation to one or two and preferably three or more base transceiver stations of a cellular network.

Combining the information about the location/coordinates of the parking spot with the data of a database about the fee per time unit dependent on location, time of the day and day of the week the right amount is always paid for the car park ticket - not too little so that a parking ticket is written and not too much so that the user loses money unnecessarily.

By accessing data about national/regional parking regulations, the user can be presented to relevant information about where it is allowed to park and where it is not allowed to park, e.g. how close to an intersection it is allowed to park, whether you are allowed to park on one side or both sides of the streets and if there are restrictions in how long a vehicle may be parked on the same spot.

Combining the information about the location/coordinates of the parking spot with the data of a database about national/regional parking regulations, the mobile communication device can tell whether it is legal or not legal to park at this very spot.

If the user cannot find a parking spot, the vehicle movement device can based on the present location of the vehicle access data from a database about available parking spots in that area. No time and gas is wasted by driving through the one and the other street in vain to find a parking spot.

### Item 13

The present disclosure further relates to a parking system or a second parking system, comprising
- a vehicle movement device, comprising at least a motion sensor and a communication unit and being arrangeable in a vehicle, and
- a software application executable
   on a mobile communication device having a communication unit or
   on the vehicle movement device,
   wherein the software application is configured to execute the steps of
   - receiving from the motion sensor a first indication that the vehicle is parked, and activating the parking application, and/or
   - receiving from the motion sensor a second indication that the parking of the vehicle is terminated, and providing a notification.

All the features of this present disclosure and all the following embodiments have been discussed above and below in relation to the above-mentioned first parking system and all embodiments related to the first parking system. All advantages and all amendments presented in relation to that above-mentioned and below-mentioned parking system and all related embodiments are also valid for this present parking system. All definitions of each feature, separately or in combination, presented in relation to that above-mentioned parking system and all related embodiments are also valid for this present parking system.

The first indication and the second indication can be any signal or data based on one or more signals that show that a parking session has been initiated or terminated, respectively.

The software application can be a computer program, and the mobile communication device and/or the vehicle movement device can have a processor, where the computer program comprises instructions which, when the program is executed by the processor, cause the processor to carry out the steps of
- receiving from the motion sensor a first indication that the vehicle is parked, and activating the parking application, and/or
- receiving from the motion sensor a second indication that the parking of the vehicle is terminated, and providing a notification.

In all the following embodiments, when it reads that the software application is configured to execute certain steps, it can also mean that the computer program comprises instructions which, when the program is executed by the processor, cause the processor to carry out those certain steps.

### Item 14

In one embodiment, the motion sensor can be at least one GPS unit. The software application can be configured to execute a step of receiving on the mobile communication device or on vehicle movement device from the at least one GPS unit a coordinate indicating a first position.

### Item 15

In one embodiment, the first indication can be that the coordinate indicates a position that can be within a parking lot, which will preferably activate the parking application.

### Item 16

In one embodiment, the software application can be configured to execute a step of receiving from a second GPS unit of the mobile communication device a coordinate indicating a second position. By comparing the coordinates of the first and second GPS units, the parking system can check if the mobile communication device is moving away from or is far from the vehicle movement device, which will be a first indication. If, after a ticket has been bought, when comparing the coordinates of the first and second GPS units the mobile communication device is moving towards the vehicle movement device, that will be a second indication.

### Item 17

In one embodiment, the first indication can be that the coordinates indicate a distance between the first and the second positions that is more than a first predetermined distance, and/or wherein the second indication can be that the coordinates indicate a distance between the first and the second positions that is less than a second predetermined distance.

### Item 18

In one embodiment, the motion sensor can be at least one accelerometer unit.

### Item 19

In one embodiment, the software application can be configured to execute a step of receiving on the mobile communication device or on vehicle movement device from the accelerometer unit an acceleration signal indicating an acceleration, and wherein the first indication can be that the acceleration signal indicates no acceleration, and/or wherein the second indication can be that the acceleration signal indicates a change from no acceleration to acceleration.

### Item 20

In one embodiment, the motion sensor can be at least one pressure sensor.

### Item 21

In one embodiment, the software application can be configured to execute a step of receiving on the mobile communication device or on vehicle movement device from the pressure sensor a pressure signal indicating a pressure, and wherein the first and/or the second indication can be that the pressure signal indicates a change in the pressure.

### Item 22

In one embodiment, the motion sensor can be at least a ball motion sensor having two conductors and a cavity comprising one or more balls movable within the cavity, wherein the ball motion sensor can be configured so that the one or more balls during motion of the vehicle movement device makes or breaks electrical contact between the two conductors.

### Item 23

In one embodiment, the software application can be configured to execute a step of receiving on the mobile communication device or on the vehicle movement device from one of the conductors a ball motion signal in response to a signal applied to the other conductor, and wherein the first indication can be receipt of or interruption of the ball motion signal for longer than a second predetermined time and/or the second indication can be interruption of or receipt of the ball motion signal.

### Item 24

In one embodiment, the motion sensor can be a first Bluetooth device configured to transmit or receive a first Bluetooth signal to or from a second Bluetooth device of the mobile communication device, wherein the first indication can be an interruption in the first Bluetooth signal, and/or the second indication can be a resumption of the first Bluetooth signal. In this embodiment, the motion sensor can be a Bluetooth piconet linking at least the first Bluetooth device and the second Bluetooth device.

### Item 25

In an embodiment of the present disclosure, the first Bluetooth signal can be sent using iBeacon protocol, Eddystone protocol, AltBeacon protocol or GeoBeacon protocol, and wherein the first indication can be a lack of receipt of the first Bluetooth signal by the first Bluetooth device or the second Bluetooth device for a period longer than the first predetermined time-period, and/or wherein the second indication can be the receipt of the first Bluetooth signal by the first Bluetooth device or the second Bluetooth device.

The first Bluetooth signal can be repeatedly sent with a first predetermined time-period.

### Item 26

In an embodiment of the present disclosure, the software application can be configured for executing the steps of:
- measuring a first signal strength of the first Bluetooth signal, wherein the first indication can be a decline in the first signal strength in three or four consecutive measurements, or
- sensing that a received signal strength indication (RSSI) of the first Bluetooth signal received by at least one of the Bluetooth devices decreases in at least three consecutive measurements.

### Item 27

In an embodiment, the mobile communication device can be a mobile phone.

### Item 28

In an embodiment of the present disclosure, the software application can be configured to execute the step of
- accessing an online database comprising data about
   - the fee per time unit dependent on location, time of the day and day of the week,
   - national/regional parking regulations, and/or
   - available parking spaces in the area.

### Item 29

In an embodiment of the present disclosure, the parking system can comprise the mobile communication device, wherein the parking system can be modified in that that the mobile communication device comprises the motion sensor.

The mobile communication unit can have the motion sensor in the form of the GPS unit, the accelerometer unit, the second Bluetooth device, and/or the ball motion sensor.

### Item 30

The present disclosure also relates to a method of training a vehicle movement device and possibly also a mobile communication device, comprising the steps of: providing a motion sensor, detecting status of the motion sensor at different parking states, applying machine learning algorithms to determine a parking status of the vehicle, whereby the vehicle movement device is trained to evaluate a change in the parking state.

Training the vehicle movement device may also include training the mobile communication device or training the vehicle movement device to correctly interpret signals and/or data sent from the mobile communication device to the vehicle movement device.

The opening and/or closing of the car door will form a specific vibration pattern that the vehicle movement device by the use of the motion sensor can be trained to recognise.

Likewise the movements of the user when entering the car from a standing position next to the vehicle to a seated position behind the steering wheel, as well as the motions by the user when finding the right, comfortable position behind the steering wheel are both movement patterns that the vehicle movement device by the use of the motion sensor can be trained to recognise.

How the motion patterns look like may depend on whether the motion sensor is worn by the user or is located in the vehicle, but in both cases the motion pattern will be similar from time to time and by training the vehicle movement device, the vehicle movement device will know how much different they can be.

Each user will have a specific motion pattern or procedure when entering the car that a car movement system can be trained to recognise. Even though the motion pattern when entering the car is individual there are similarities, since each user has to move from a standing position to a seated position behind the steering wheel, and when the car movement system has been trained to recognise the specific motion pattern of one user the car movement system will recognise the specific motion pattern of another user within a short time.

The vehicle movement device will be trained to recognise the above-mentioned motion patterns and will understand that each one of them separately or taken together means that the user is about to leave the parking spot - that there is a change in the in the parking state from parking to not parking. The vehicle movement device will issue a notification to terminate the car park ticket if it has not already expired.

Like when entering a car, each user will have a specific motion pattern when leaving the car that a car movement system can be trained to recognise. As was mentioned about the motion pattern when entering the car, also even though the motion pattern when leaving the car is individual there are similarities, since each user has to move from a seated position behind the steering wheel to a standing position next to the car. When the car movement system has been trained to recognise the specific motion pattern of one user, the car movement system will recognise the specific motion pattern of another user within a short time.

The vehicle movement device will be trained to recognise these motion patterns and will understand that each one of them separately or taken together means that the user is about to park the vehicle - that there is a change in the in the parking state from no parking to parking. The vehicle movement device will tell the mobile communication device to open the parking application so that a car park ticket can be bought.

### Item 31

In an embodiment of the present disclosure the change in the parking state may be initiation of parking or termination of parking.

### Item 32

In an embodiment of the present disclosure the motion sensor may be at least one GPS unit, at least one accelerometer unit, at least one pressure sensor, at least one ball motion sensor and/or a Bluetooth piconet linking at least two devices and/or a first Bluetooth device together with a second Bluetooth device, which are linked to each other in a Bluetooth piconet, and wherein detecting a status of the motion sensor can be measuring GPS coordinates, detecting accelerometer status measuring the pressure inside the vehicle, measuring a movement of the ball motion sensor and possibly also the vehicle and/or detecting Bluetooth piconet status and/or detecting a receipt or a lack of receipt of the first Bluetooth signal..

If the motion sensor is at least one GPS unit the vehicle movement device can be trained to determine parking status of the vehicle and to evaluate a change in the parking state. The vehicle movement device can be trained to recognize the coordinates from the GPS unit where the user normally parks the car. It could be close to the work location or close to a show or another place the user frequently visits using the car. When the user in the car approaches one of those spots, the vehicle movement device will understand based on the information from the GPS unit that parking is imminent. When the car has stopped, the coordinates from the GPS unit will not change. The vehicle movement device can be trained to recognize how long the time-period during which the coordinates do not change has to be. When the time-period is longer that means that the car is parked. The vehicle movement device will then check if a car park ticket needs to be bought for this parking spot at this time. If yes, the vehicle movement device will activate the parking application in the mobile communication device so that the user can buy the car park ticket.

If the motion sensor is at least one pressure sensor, the vehicle movement device can be trained to determine parking status of the vehicle and to evaluate a change in the parking state. The vehicle movement device can be trained to recognize changes in pressure inside the vehicle as measured by the pressure sensor when opening and closing a door of the vehicle compared to opening and closing a window when driving. The vehicle movement device can be trained to recognize the small changes in pressure inside the vehicle due to movements from the persons inside the vehicle followed by the clear decrease and increase in the pressure inside the vehicle as measured by the pressure sensor when opening and closing a door of the vehicle as a first indication. The vehicle movement device can be trained to recognize the lack of changes in pressure inside the vehicle followed by the clear decrease and increase in the pressure inside the vehicle as measured by the pressure sensor when opening and closing a door of the vehicle as a second indication.

If the motion sensor is at least one ball motion sensor, the vehicle movement device can be trained to determine parking status of the vehicle and to evaluate a change in the parking state.

If the ball motion sensor is a sensitive ball motion sensor, the vehicle movement device can be trained to recognize the difference in pattern of the vibrations from the engine compared to the vibrations caused by the wind blowing passed the vehicle. In that way, strong wind blowing passed the vehicle at a parking spot will not hinder the parking application to be activated, when the engine is turned off.

If the ball motion sensor is not a sensitive ball motion sensor, the vehicle movement device can be trained to recognize the pattern in movement during the parking procedure, where the vehicle makes many sharp turns within a short time.

If the motion sensor is a Bluetooth piconet linking at least two devices, where one Bluetooth device is in the car and the other Bluetooth device is worn by the user, e.g. the Bluetooth device can be a Bluetooth device of the mobile communication device, vehicle movement device can be trained to determine parking status of the vehicle and to evaluate a change in the parking state depending on the communication strength between the two devices. When the communication strength has been strong but is suddenly becoming weaker the user is probably leaving the car and the parking application has to be activated in the mobile communication device. If there has been no connection between the two devices and communication strength between them are suddenly becoming stronger that can be a signal for the vehicle movement device to issue a notification to the user to terminate the car park ticket if the car park ticket has not already expired. The vehicle movement device will tell the mobile communication device to open the parking application so that the user can terminate the car park ticket.

If the motion sensor is an accelerometer unit positioned in the vehicle movement device and/or in a mobile communication device, the vehicle movement device can be trained effectively to determine parking status of the vehicle and to evaluate a change in the parking state.

The opening and/or closing of the car door will form a specific vibration pattern that the accelerometer unit is suited to register. The vehicle movement device can be trained to recognise the corresponding signals as an indication that the parking state is changing.

Likewise the movements of the user when entering the car from a standing position next to the vehicle to a seated position behind the steering wheel, as well as the motions by the user when finding the right, comfortable position behind the steering wheel are both movement patterns that the vehicle movement device can be trained to recognise, and which the accelerometer unit is especially suited to register.

How the vibration patterns look like may depend on whether the accelerometer unit is worn by the user or is located in the vehicle, but in both cases the vibration pattern will be similar from time to time and by training the vehicle movement device, the vehicle movement device will know how much different they can be.

Each user will have a specific motion pattern or procedure when entering the car that a car movement system can be trained to recognise. Even though the motion pattern when entering the car is individual there are similarities, since each user has to move from a standing position to a seated position behind the steering wheel, and when the car movement system has been trained to recognise the specific motion pattern of one user the car movement system will recognise the specific motion pattern of another user within a short time.

The vehicle movement device will be trained to recognise the above-mentioned motion patterns and will understand that each one of them separately or taken together means that the user is about to leave the parking spot - that there is a change in the in the parking state from parking to not parking. The vehicle movement device will issue a notification to terminate the car park ticket if it has not already expired.

Like when entering a car, each user will have a specific motion pattern when leaving the car that a car movement system can be trained to recognise. As was mentioned about the motion pattern when entering the car, also even though the motion pattern when leaving the car is individual there are similarities, since each user has to move from a seated position behind the steering wheel to a standing position next to the car. When the car movement system has been trained to recognise the specific motion pattern of one user, the car movement system will recognise the specific motion pattern of another user within a short time.

The vehicle movement device will be trained to recognise these motion patterns and will understand that each one of them separately or taken together means that the user is about to park the vehicle - that there is a change in the in the parking state from no parking to parking. The vehicle movement device will tell the mobile communication device to open the parking application so that a car park ticket can be bought.

### Item 33

The present disclosure also relates to a vehicle movement device as defined above or below and with all the advantages mentioned above or below alone or when combined with the other parts mentioned above or below.

### Item 34

The present disclosure further relates to a parking watch, comprising a parking system as described above with all the advantages and benefits mentioned above and below, wherein preferably the parking watch can be configured to be activated when the parking application can be activated, and wherein preferably the parking watch can be configured to be terminated when the notification can be provided.

The parking watch is an electronic parking disc so that the time can be set automatically when parking at a parking spot with time-restricted parking, where a parking disc is required. The parking watch can have an internal clock that is used to set the time or the parking watch communicates through the vehicle movement device with the mobile communication device to receive the time. The time can be automatically set each time the vehicle movement device through the motion sensor registers a change in the parking state to the parking state. That ensures that no parking ticket will be written due lack of set time of the parking watch.

### Item 35

In an embodiment of the present disclosure the parking watch can comprise a vehicle movement device, wherein the system is trained as described above to provide a parking status and to determine a change in the parking state.

### Item 36

In an embodiment of the present disclosure, the parking watch can have been set at the time of parking, and wherein the vehicle movement device can be adapted to send a third notification to the mobile communication device that the time is about to expire. The user will not accidently forget to get back to the vehicle in time and no parking ticket will be written.

### Item 37

In an embodiment of the present disclosure, the mobile communication device can have a GPS unit and the vehicle movement device can have a GPS unit, and wherein the vehicle movement device can be configured to send the third notification a time in advance that is longer than the walking time based on the distance between the coordinates of the GPS units.

If the mobile communication device has a GPS unit and the vehicle movement device has a GPS unit, the vehicle movement device can be configured to send the third notification a time in advance that is longer than the walking time based on the distance between the coordinates of the GPS units.

When the user receives the third notification the user knows that the user needs to return to the vehicle. The user can utilise the whole parking time without risking that a parking ticket will be written.

### Item 38

The present disclosure further relates to a mobile communication device comprising a software application executable on the mobile communication device and configured for executing the steps of:
- receiving from a motion sensor as defined and described above with all the advantages and benefits mentioned above and below in a vehicle movement device as defined and described above with all the advantages and benefits mentioned above and below information that a vehicle has been parked, and activating a parking application on the mobile communication device, or
- receiving from the motion sensor in the vehicle movement device that a vehicle has been stopped parking, and activating a notification as defined and described above with all the advantages and benefits mentioned above and below about terminating the car park ticket.

These and other aspects of the invention are set forth in the following detailed description of the invention.

### Description of Drawings

The invention will in the following be described in greater detail with reference to the accompanying drawings.
Figure 1 shows a user entering a car at a parking spot,
Figure 2 shows the user driving away from the parking spot, and
Figure 3 shows the user parking the car in another parking spot.

### Detailed description of the invention

The invention is described below with the help of the accompanying figures. It would be appreciated by the people skilled in the art that the same feature or component of the device is referred with the same reference numeral in different figures. A list of the reference numbers can be found at the end of the detailed description section.

### Reference numbers

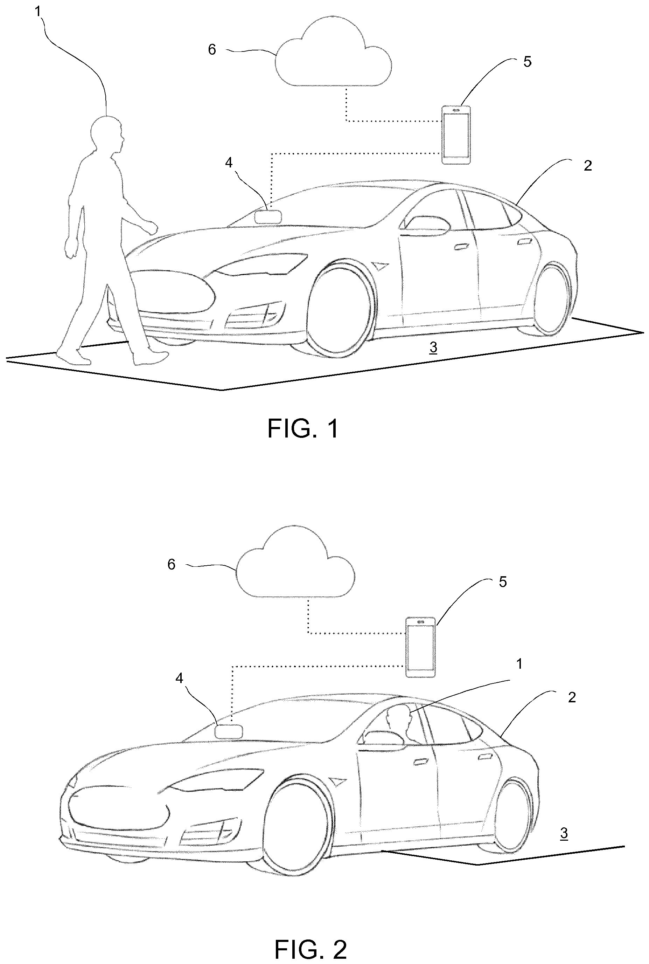

Fig. 1 shows a user 1 entering a vehicle 2 like a car 2 at a parking spot 3. In principle, the vehicle could be any vehicle that needs a car park ticket. A parking watch or parking system with a vehicle movement device 4 can comprise a first motion sensor (not shown) like an accelerometer unit, GPS unit, and/or a Bluetooth piconet connecting two Bluetooth devices positioned in the car and/or in a mobile communication device 5 of the user. The accelerometer unit registers the vibrations from the opening and/or closing of the car door, or registers the motions by the user when finding the right position behind the steering wheel. Alternatively or in addition, the accelerometer unit in the mobile communication device of the user registers the typical movements of the user when entering the car. Each user will have a specific motion pattern or procedure when entering the car that a car movement system can be trained to recognise. Even though the motion pattern when entering the car is individual there are similarities, since each user has to move from a standing position to a seated position behind the steering wheel, and when the car movement system has been trained to recognise the specific motion pattern of one user the car movement system will recognise the specific motion pattern of another user within a short time.

Instead of or in addition to the accelerometer unit positioned in the car or in the mobile communication device of the user, the vehicle movement device can comprise a second motion sensor in the form of a GPS unit (not shown) in the mobile communication device 5 of the user registers that the user is approaching the spot, where the user parked, paid a car park ticket and left the car a while ago. Since a car and a user walking will to approach a parking spot 3 along different paths - roads and gates for the car and pavements and doors for the walking user, the GPS unit is able to distinguish whether the GPS unit is approaching the parking spot by being driven by a car or by being carried by a walking user. The user might arrive by another car that the user wants to park in a parking spot next to the parking spot 3 with the car 2 previously parked. In that situation, the user might not be interested in terminating the car park ticket of the car parked previously and will not appreciate to receive a notification about terminating the previous car park ticket.

Instead of or in addition to the accelerometer unit positioned in the car 2 or in the mobile communication device 5 of the user, and instead of or in addition to the GPS unit in the mobile communication device of the user, the vehicle movement device can comprise a third motion sensor in the form of a Bluetooth piconet (not shown) of at least a first Bluetooth device located in the car 2 and at least a second Bluetooth device (not shown) of the mobile communication device 5 of the user 1. When the user 1 is approaching the car 2, the Bluetooth devices will connect. Often the Bluetooth device of the car is deactivated unless the ignition switch of the car is turned on. In that case, Bluetooth devices will connect and establish a piconet when the user has turned on the ignition of the car.

When one of the above-mentioned motion sensors or a combination of the motion sensors has/have registered that the user 1 is about to drive away from the parking spot 3, the parking watch or parking system checks whether a parking application is active or has recently been activated in the mobile communication device 5. If so, a notification like an audio notification and/or a visual notification that the car park ticket has to be terminated will be provided. The parking application that was used when activating and paying for the car park ticket is automatically opened in the mobile communication device, so that the active parking application can easily be deactivated or terminated.

The mobile communication device 5 is shown up in the air for illustrative purposes only. The mobile communication device 5 is normally worn by the user 1.

The mobile communication device 5 has connection to the internet 6 and through the internet to databases about the fee per time unit dependent on location, time of the day and day of the week; national/regional parking regulations; and/or available parking spaces in the area.

Advantageously, it is the vehicle movement device 4 in the parking watch or in the parking system that comprises the processor for processing all the data. So if it is said that the parking watch or the parking system or any other object is processing data or instructing other objects to do something advantageously it means that the vehicle movement device 4 is processing data or instructing other objects to do something.

Fig. 2 shows the user 1 driving away from the parking spot 3. If the parking application has not been deactivated or terminated another beeping sound prompts the user to take action and deactivate or terminate the parking application.

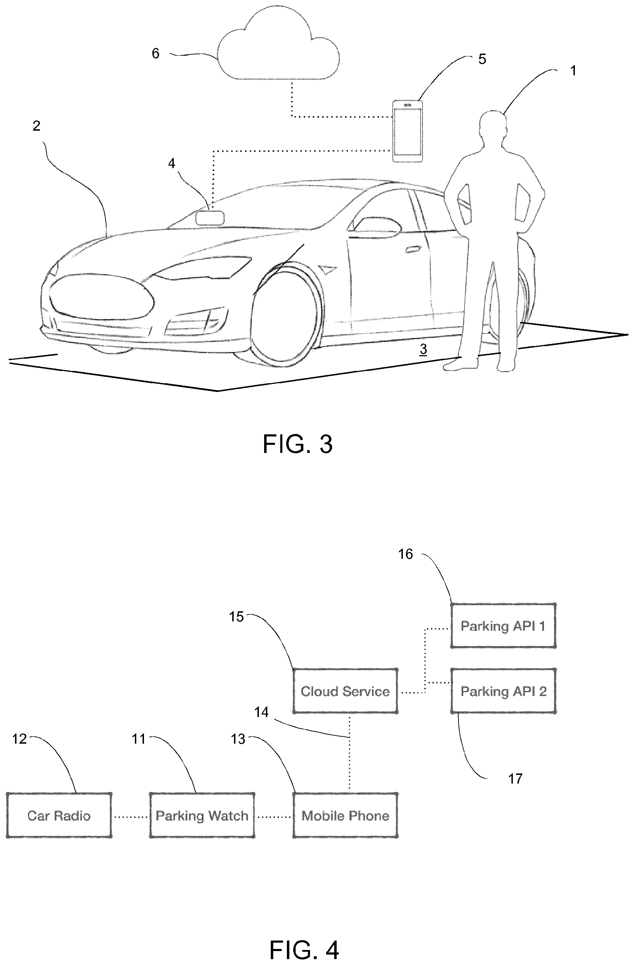

In Fig. 3, the user 1 has parked the car 2 in a parking spot 3. If the parking watch or parking system with the vehicle movement device 4 comprises the first motion sensor (not shown) like an accelerometer unit (not shown) positioned in the car or in a mobile communication device 5 of the user 1, the accelerometer unit may register that the car has come to a standstill, that vibrations from the engine has ceased, and/or the opening and/or closing of the car door.

If the first motion sensor is an accelerometer unit positioned in the mobile communication device 5 of the user, the accelerometer can also or alternatively register the typical movements by the user when getting out of the car. Like when entering a car, each user will have a specific motion pattern when leaving the car that a car movement system can be trained to recognise. As was mentioned about the motion pattern when entering the car, also even though the motion pattern when leaving the car is individual there are similarities, since each user has to move from a seated position behind the steering wheel to a standing position. When the car movement system has been trained to recognise the specific motion pattern of one user 1, the vehicle movement device 4 will recognise the specific motion pattern of another user within a short time.

If the vehicle movement device 4 comprises the second motion sensor in the form of a GPS unit (not shown) in the mobile communication device 5 of the user 1. As mentioned above, the GPS unit is able to distinguish whether the GPS unit is approaching the parking spot by being driven by a car or by being carried by a walking user. Of course the same is true when leaving the parking spot. The parking system and/or the parking watch is/are able to register that the user is walking away from the car.

In addition or alternatively, the car can also have a GPS unit. By comparing the coordinates of the two GPS units, the parking system will be able to register that the user is walking away from the car.

If the vehicle movement device comprises the third motion sensor in the form of a Bluetooth piconet (not shown) of at least a first Bluetooth device (not shown) located in the car and at least a second Bluetooth device (not shown) of the mobile communication device of the user, the third motion sensor is able to register that the signal between the two Bluetooth devices is getting weaker when the user is walking away from the car.

As mentioned above, often the Bluetooth device of the car is deactivated unless the ignition switch of the car is turned on. In that case, Bluetooth devices will disconnect when the user has turned off the ignition of the car. That will be an early sign that the user is about to leave the car 2.

When the parking watch or the parking system registers that the user 1 is leaving the car, the parking watch or the parking system checks whether the car is inside a parking zone that requires payment. If so, a parking application is opened. The parking watch or the parking system can check which company the parking fee should be paid to, based e.g. on the position according to the GPS unit, in combination with a database connecting the position and the company to receive the parking fee.

If there is no parking fee needed the parking watch or parking system is set to current time +1 0min. The parking watch or the parking system can check for how long the car is allowed to be parked in the parking spot 3, based e.g. on the position according to the GPS unit, in combination with a database about the length of the parking time depending on the location. The parking watch or the parking system notifies the user through the mobile communication device 5 of the user when the time is about to elapse. How long time in advance the parking watch or the parking system will notify the user can depend on the distance between the GPS unit of the mobile communication device of the user and the GPS unit of the car and how long time it will take for the user to walk and/or take public transportation back to the car.

In some cases a car park ticket has to be bought during the day time, while the nights are free. If a car is parked during the night in such an area, it will be advantageous that the parking watch or the parking system notifies the user through the mobile communication device of the user a little while before a car park ticket has to be bought in the morning. How long time in advance the parking watch or the parking system will notify the user can depend on the distance between the GPS unit of the mobile communication device of the user and the GPS unit of the car and how long time it will take for the user to walk and/or take public transportation back to the car. Advantageously, the

Fig. 4 shows the structure of how different objects communicate with each other.

A parking watch 11, which can also be a parking system, comprises a vehicle movement device (not shown). The vehicle movement device in the parking watch 11 comprises a communication unit like e.g. a first Bluetooth device (not shown) that can connect to a second Bluetooth device (not shown) in a car radio 12 of the vehicle. The vehicle movement device can use the first and second Bluetooth devices to determine parking status and change in parking state as described above.

The first Bluetooth device of the vehicle movement device can also communicate with a third Bluetooth device (not shown) of a mobile communication device 13 or a mobile phone/smart phone 13. Other techniques of communication between the vehicle movement device in the parking watch 11 and the mobile communication device 13 are also possible.

The mobile communication device 13 has through a wireless internet connection 14 access to a cloud service 15 which can connect to different application programming interfaces (API), like a Parking API 1 16 and a Parking API 2 17.

The Parking API 1 16 can for one city, region or country comprise all the rules about parking including where you are allowed to park and where you are not allowed to park, comprise the fees per time unit dependent on location, time of the day and day of the week, comprise the length of time you are allowed to park using a parking disc dependent on location, comprise available parking spaces in the area like in the city, region or country.

The Parking API 2 17 can comprise the same information as the Parking API 1 16 but for another city, region or country.

With the information from the Parking API 1 16 and/or Parking API 2 17, the parking application on the mobile communication device 13 can present the correct fee to be paid at that very moment to the user or alternatively that no fee is necessary until a certain time.

With the information from the Parking API 1 16 and/or Parking API 2 17, the parking application may inform the user that it is not allowed to park in this spot until a certain time. All this information is a benefit for the user, since the user does not need to worry that the vehicle is parked, where it is not allowed, and the user does not need to spend any time finding it out. The information is just at hand.

### Items

The presently disclosed may be described in further detail with reference to the following items.
1. A parking system, comprising:
   - a vehicle movement device, comprising at least a motion sensor and a communication unit, and
   - a mobile communication device comprising a parking application and a communication unit,
   wherein the vehicle movement device is arrangeable in a vehicle, and wherein the vehicle movement device is configured to activate the parking application when the motion sensor senses that the vehicle is parked.
2. The parking system according to item 1, wherein the vehicle movement device is further configured to provide a notification when the motion sensor senses that parking of the vehicle has terminated.
3. The parking system according to item 2, wherein the notification is an audio, visual, and/or vibrational notification.
4. The parking system according to any of the preceding items, wherein the activation of the parking application includes setting the parking time to a predetermined time-period.
5. The parking system according to any of the preceding items, wherein the mobile communication device is a smart phone or a tablet.
6. The parking system according to any of the preceding items, wherein the vehicle is a car or a motor bicycle.
7. The parking system according to any of the preceding items, wherein the motion sensor is at least one GPS unit, at least one accelerometer unit, at least one pressure sensor, at least one ball motion sensor and/or a Bluetooth piconet linking at least two Bluetooth devices.
8. The parking system according to item 7, wherein the vehicle movement device is configured to activate the parking application when the Bluetooth piconet is disconnected or senses that a signal strength or a received signal strength indication (RSSI) of a first Bluetooth signal received by at least one of the Bluetooth devices decreases in at least three consecutive measurements.
9. The parking system according to item 8, wherein the first Bluetooth signal is sent using iBeacon protocol, Eddystone protocol, AltBeacon protocol or GeoBeacon protocol, and wherein the vehicle movement device is configured to activate the parking application due to a lack of receipt of the first Bluetooth signal by the first Bluetooth device or the second Bluetooth device, preferably for a period longer than a first predetermined time-period, and/or wherein the vehicle movement device is configured to provide a notification that parking of the vehicle has terminated due to a receipt of the first Bluetooth signal by the first Bluetooth device or the second Bluetooth device.
10. The parking system according to any of the preceding items, wherein the vehicle movement device is configured for accessing an online database comprising data about
   - the fee per time unit dependent on location, time of the day and day of the week,
   - national/regional parking regulations, and/or
   - available parking spaces in the area like in the city, region or country.
11. The parking system according to any of the preceding items, wherein the vehicle movement device is integrated in the mobile communication device.
12. The parking system according to any of the preceding items, wherein the mobile communication device has a GPS unit and the vehicle movement device has a GPS unit.
13. A parking system, comprising
   - a vehicle movement device, comprising at least a motion sensor and a communication unit and being arrangeable in a vehicle, and
   - a software application executable
      on a mobile communication device having a communication unit or
      on the vehicle movement device,
      wherein the software application is configured to execute the steps of
      - receiving from the motion sensor a first indication that the vehicle is parked, and activating a parking application, and/or
      - receiving from the motion sensor a second indication that parking of the vehicle has terminated, and providing a notification.
14. The parking system according to item 13, wherein the motion sensor is at least one GPS unit, wherein the software application is configured to execute a step of receiving on the mobile communication device or on vehicle movement device from the at least one GPS unit a coordinate indicating a first position.
15. The parking system according to item 14, wherein the first indication is that the coordinate indicates a position that is within a parking lot.
16. The parking system according to item 14 or 15, wherein the software application is configured to execute a step of receiving from a second GPS unit of the mobile communication device a coordinate indicating a second position,
17. The parking system according to item 16, wherein the first indication is that the coordinates indicate a distance between the first and the second positions that is more than a first predetermined distance, and/or wherein the second indication is that the coordinates indicate a distance between the first and the second positions that is less than a second predetermined distance.
18. The parking system according to any of the preceding items 13 to 17, wherein the motion sensor is at least one accelerometer unit.
19. The parking system according to item 18, wherein the software application is configured to execute a step of receiving on the mobile communication device or on vehicle movement device from the accelerometer unit an acceleration signal indicating an acceleration, and wherein the first indication is that the acceleration signal indicates no acceleration, and/or wherein the second indication is that the acceleration signal indicates a change from no acceleration to acceleration.
20. The parking system according to any of the preceding items 13 to 19, wherein the motion sensor is at least one pressure sensor.
21. The parking system according to item 20, wherein the software application is configured to execute a step of receiving on the mobile communication device or on vehicle movement device from the pressure sensor a pressure signal indicating a pressure, and wherein the first and/or the second indication is that the pressure signal indicates a change in the pressure.
22. The parking system according to any of the preceding items 13 to 21, wherein the motion sensor is at least a ball motion sensor having two conductors and a cavity comprising one or more balls movable within the cavity, wherein the ball motion sensor is configured so that the one or more balls during motion of the vehicle movement device makes or breaks electrical contact between the two conductors.
23. The parking system according to item 22, wherein the software application is configured to execute a step of receiving on the mobile communication device or on vehicle movement device from one of the conductors a ball motion signal in response to a signal applied to the other conductor, and wherein the first indication is receipt of or interruption of the ball motion signal for longer than a predetermined time and/or the second indication is interruption of or receipt of the ball motion signal.
24. The parking system according to any of the preceding items 13 to 23, wherein the motion sensor is a first Bluetooth device configured to transmit or receive a first Bluetooth signal to or from a second Bluetooth device of the mobile communication device, wherein the first indication is an interruption in the first Bluetooth signal, and/or the second indication is a resumption of the first Bluetooth signal.
25. The parking system according to item 24, wherein the first Bluetooth signal is sent using iBeacon protocol, Eddystone protocol, AltBeacon protocol or GeoBeacon protocol, and wherein the first indication is a lack of receipt of the first Bluetooth signal by the first Bluetooth device or the second Bluetooth device preferably for a period longer than a first predetermined time-period, and/or wherein the second indication is the receipt of the first Bluetooth signal by the first Bluetooth device or the second Bluetooth device.
26. The parking system according to item 24 or 25, wherein the software application is configured for executing the steps of:
   - measuring a first signal strength of the first Bluetooth signal, wherein the first indication is a decline in the first signal strength in three or four consecutive measurements, or
   - sensing that a received signal strength indication (RSSI) of the first Bluetooth signal received by at least one of the Bluetooth devices decreases in at least three consecutive measurements.
27. The parking system according to any of the preceding claims 13 to 26, wherein the mobile communication device is a mobile phone.
28. The parking system according to any of the preceding items 13 to 27, wherein the software application is configured to execute the step of
   - accessing an online database comprising data about
      - the fee per time unit dependent on location, time of the day and day of the week, of the month and/or of the year,
      - national/regional parking regulations, and/or
      - available parking spaces in the area.
29. The parking system according to any of the preceding items 13 to 28, wherein the parking system comprises the mobile communication device, wherein the parking system is modified in that that the mobile communication device comprises the motion sensor.
30. A method of training a vehicle movement device according to items 1 to 29, comprising the steps of:
   - providing a motion sensor,
   - detecting status of the motion sensor at different parking states,
   - applying machine learning algorithms to determine a parking status of the vehicle, whereby the vehicle movement device is trained to evaluate a change in the parking state.
31. The method according to item 30, wherein the change in the parking state is initiation of parking or termination of parking.
32. The method according to claim 30 or 31, wherein the motion sensor is at least one or two GPS units, at least one accelerometer unit, a pressure sensor, a ball motion sensor, and/or a first Bluetooth device together with a second Bluetooth device, and wherein detecting a status of the motion sensor is measuring GPS coordinates, detecting accelerometer status comparing at least two pressure measurements, connectivity of two electrodes of the ball motion sensor and/or detecting a receipt or a lack of receipt of the first Bluetooth signal.
33. A vehicle movement device as defined in any of the preceding items 1 to 32.
34. A parking watch, comprising a parking system according to any of the preceding items 1 to 33, wherein preferably the parking watch is configured to be activated when the parking application is activated, and wherein preferably the parking watch can be configured to be terminated when the notification is provided.
35. The parking watch according to claim 34, comprising a vehicle movement device, wherein the system is trained according to any of the items 30 to 32, to provide a parking status.
36. The parking watch according to item 34 or 35, wherein the parking watch has been set at the time of parking, and wherein the vehicle movement device is configured to send a third notification to the mobile communication device that the time is about to expire.
37. The parking watch according to item 36, wherein the mobile communication device has a GPS unit and the vehicle movement device has a GPS unit, and wherein the vehicle movement device is configured to send the third notification a time in advance that is longer than the walking time based on the distance between the coordinates of the GPS units.
38. A mobile communication device comprising a software application executable on the mobile communication device and configured for executing the steps of:
   - receiving from a motion sensor as defined in any of the preceding items 1 to 37 in a vehicle movement device as defined in any of the preceding items 1 to 37 information that a vehicle has been parked, and activating a parking application on the mobile communication device, or
   - receiving from the motion sensor in the vehicle movement device information that parking of a vehicle has been terminated, and activating a notification as defined in any of the preceding items 1 to 37 about terminating the car park ticket.

### References

1: user
2: vehicle or car
3: parking spot
4: vehicle movement device
5: mobile communication device
6: internet

## Claims

1. A parking system, comprising
- a vehicle movement device, comprising at least a motion sensor and a communication unit and being arrangeable in a vehicle, and
- a software application executable
on a mobile communication device having a communication unit or
on the vehicle movement device,
wherein the software application is configured to execute the steps of
- receiving from the motion sensor a first indication that the vehicle is parked, and activating the parking application, and/or
- receiving from the motion sensor a second indication that parking of the vehicle has terminated, and providing a notification.

2. The parking system according to claim 1, wherein the motion sensor is at least one GPS unit, wherein the software application is configured to execute a step of receiving on the mobile communication device or on vehicle movement device from the at least one GPS unit a coordinate indicating a first position.

3. The parking system according to claim 2, wherein the software application is configured to execute a step of receiving from a second GPS unit of the mobile communication device a coordinate indicating a second position, wherein the first indication is that the coordinates indicate a distance between the first and the second positions that is more than a first predetermined distance, and/or wherein the second indication is that the coordinates indicate a distance between the first and the second positions that is less than a second predetermined distance.

4. The parking system according to any of the preceding claims 1 to 3, wherein the motion sensor is at least one accelerometer unit, wherein the software application is configured to execute a step of receiving on the mobile communication device or on vehicle movement device from the accelerometer unit an acceleration signal indicating an acceleration, and wherein the first indication is that the acceleration signal indicates no acceleration, and/or wherein the second indication is that the acceleration signal indicates a change form no acceleration to acceleration.

5. The parking system according to any of the preceding claims 1 to 4, wherein the motion sensor is at least one pressure sensor, wherein the software application is configured to execute a step of receiving on the mobile communication device or on vehicle movement device from the pressure sensor a pressure signal indicating a pressure, and wherein the first and/or the second indication is that the pressure signal indicates a change in the pressure.

6. The parking system according to any of the preceding claims 1 to 5, wherein the motion sensor is at least a ball motion sensor having two conductors and a cavity comprising one or more balls movable within the cavity, where the ball motion sensor is configured so that the one or more balls during motion of the vehicle movement device makes or breaks electrical contact between the two conductors, wherein the software application is configured to execute a step of receiving on the mobile communication device or on vehicle movement device from one of the conductors a ball motion signal in response to a signal applied to the other conductors, and wherein the first indication is receipt of or interruption of the ball motion signal for longer than a predetermined time and/or the second indication is interruption of or receipt of the ball motion signal.

7. The parking system according to any of the preceding claims 1 to 6, wherein the motion sensor is a first Bluetooth device configured to transmit or receive a first Bluetooth signal to or from a second Bluetooth device of the mobile communication device, wherein the first indication is an interruption in the first Bluetooth signal, and/or the second indication is a resumption of the first Bluetooth signal.

8. The parking system according to claim 7, wherein the first Bluetooth signal is repeatedly sent within a first predetermined time-period using iBeacon protocol, Eddystone protocol, AltBeacon protocol or GeoBeacon protocol, and wherein the first indication is a lack of receipt of the first Bluetooth signal by the first Bluetooth device or the second Bluetooth device for a period longer than the first predetermined time-period, and/or wherein the second indication is the receipt of the first Bluetooth signal by the first Bluetooth device or the second Bluetooth device.

9. The parking system according to claim 7 or 8, wherein the software application is configured for executing the steps of:
- measuring a first signal strength of the first Bluetooth signal, wherein the first indication is a decline in the first signal strength in three or four consecutive measurements.

10. The parking system according to any of the preceding claims 1 to 9, wherein the mobile communication device is a mobile phone.

11. The parking system according to any of the preceding claims 1 to 10, wherein the software application is configured to execute the step of
- accessing an online database comprising data about
- the fee per time unit dependent on location, time of the day and day of the week,
- national/regional parking regulations, and/or
- available parking spaces in the area.

12. The parking system according to any of the preceding claims 1 to 11, wherein the parking system comprises the mobile communication device, wherein the parking system is modified in that that the mobile communication device comprises the motion sensor.

13. A method of training a vehicle movement device, comprising the steps of:
- providing a motion sensor,
- detecting status of the motion sensor at different parking states,
- applying machine learning algorithms to determine a parking status of the vehicle, whereby the vehicle movement device is trained to evaluate a change in the parking state.

14. The method according to claim 13, wherein the change in the parking state is initiation of parking or termination of parking.

15. The method according to claim 13 or 14, wherein the motion sensor is at least one or two GPS units, at least one accelerometer unit, a pressure sensor, a ball motion sensor, and/or a first Bluetooth device together with a second Bluetooth device, and wherein detecting a status of the motion sensor is measuring GPS coordinates, detecting accelerometer status comparing at least two pressure measurements, connectivity of two electrodes of the ball motion sensor and/or detecting a receipt or a lack of receipt of the first Bluetooth signal.
